# EUROPEAN PATENT APPLICATION

(11) **EP 2 853 730 A1**
(43) Date of publication of application: **01.04.2015**
(21) Application number: 13185886.2
(22) Date of filing: 25.09.2013
(51) Int. Cl.: F03D 11/00

(54) **Monitoring mechanical load of a wind turbine component**

(71) Applicant: Siemens Aktiengesellschaft, 80333 München (DE)
(72) Inventor: Frydendal, Ib, 6683 Føvling (DK); Madsen, Lars, 6700 Esbjerg (DK)

(57) **Abstract**

It is described a method and an arrangement for monitoring a mechanical load of at least one component (411) of a wind turbine (400), the method comprising: obtaining an acceleration signal (423) indicative of an acceleration of a portion (407) of the wind turbine; deriving a current load (429) of the component based on the acceleration signal (423).

## Description

### Field of invention

The present invention relates to a method and to an arrangement for monitoring a mechanical load of at least one component of a wind turbine, in particular monitoring a mechanical load of a rotor blade.

### Art Background

A wind turbine may comprise a wind turbine tower, a nacelle mounted on top of the wind turbine tower, wherein the nacelle supports a rotor shaft to which one or more rotor blades are connected. During operation of the wind turbine, the components of the wind turbine, in particular mechanical components of the wind turbine, such as rotor blades, rotor shaft, gearbox, wind turbine tower, etc., are subjected to mechanical loads due to mechanical deformations, torsions, wind pressure, external conditions, such as temperature, humidity, etc. Monitoring of such loads may be required, since these components may have a particular lifetime which can be associated to each individual component, over which particular loads are sustainable, beyond the lifetime reliable operation may not be warranted.

Conventional turbine load control systems may be based on load signal inputs, such as inputs from particular load sensors, such as strain gauge sensors which may be installed within rotor blades. However, in these conventional systems, obtaining the load signal may be costly due to the need for the installation of additional sensors in the particular components of the wind turbine.

Within a conventional wind turbine, sensors may be installed to generate load indicating signals, wherein the sensors may be installed at structural components. Thereby, the additional sensors may increase the costs of the wind turbine in particular during installation and also during maintenance. Furthermore, conventionally, pre-programmed section curtailment for load reduction may have been applied.

There may be a need for a method and an arrangement for monitoring a mechanical load of at least one component of a wind turbine which can be performed in a simple manner without the requirement of expensive equipment.

### Summary of the Invention

This need may be met by the subject matter according to the independent claims. Advantageous embodiments of the present invention are described by the dependent claims.

According to an embodiment of the present invention, it is provided a method for monitoring a mechanical load of at least one component of a wind turbine, the method comprising obtaining an acceleration signal indicative of an acceleration of a portion of the wind turbine and deriving a current load of the component based on the acceleration signal.

The mechanical load may relate to a degree or to an extent of a deformation, strain, torsion or mechanical wear of the component, wherein the instantaneous mechanical load may vary with time, in particular over different wind speeds. In particular, the load may be imposed in a cyclic manner, such that during particular first time intervals, the load may be relatively high while during other time intervals (which may be interspersed between the first time intervals), the load may be relatively low. In particular, by the imposing different loads across the time, the component may be deformed or distorted in different directions and/in different degree such that in the material used for manufacturing the component, the arrangement of atoms, microcrystals and/or material domains may be changed on a microscopic scale, such as to negatively affect the strength of the component.

The component may be any structural element of the wind turbine, which is affected by the operation of the wind turbine. Obtaining the acceleration signal may involve obtaining an electrical and/or optical and/or electromagnetic signal, wire-based or wirelessly. The acceleration signal may in particular be provided by an accelerometer which may be installed in the wind turbine, in particular installed in a nacelle mounted on top of the wind turbine tower. In particular, the accelerometer may be installed in a conventional wind turbine for other kinds of monitoring purposes or for other control purposes. In other embodiments, the accelerometer (or another type of acceleration sensor) may be installed in another component of the wind turbine, such as installed in a wind turbine tower wall, a gearbox, a hub at which the rotor blades are connected, at one or more rotor blades, for example. The acceleration signal may vary with different wind speeds but may also additionally vary depending on a rotor blade pitch angle, affecting a resistance the rotor blade imposes to the impacting wind. In particular, for deriving the current load of a rotor blade, not only the acceleration signal alone but also a rotor blade pitch angle may be taken into account.

The current load which is derived based on the acceleration signal may represent or at least model an instantaneous load or load rate or damage rate of the component. Conventionally, the current load may be measured using a gauge strain sensor which is installed within the component, for example a rotor blade. According to this embodiment however, an additional sensor, such as a strain gauge sensor, may not be required to derive a current load of the component under consideration. Thereby, the wind turbine may be constructed in a simple manner, since only an acceleration signal, which may be provided by a conventionally installed accelerometer, may be required to derive the current load. In other embodiments, additionally to the usage of the acceleration signal, other measurement signals, such as from one or more load sensors, such as strain gauge sensors, may also be used (in combination) to derive a current load of the component based (additionally) on the additional measurement signals.

Additionally or alternatively to using measurement signals obtained from strain gauge sensors, other operational parameters or operational properties, such as rotor speed, rotor acceleration, power output, voltage output, etc., may be used or included to derive the current load from these other signals. Thereby, in particular, the method may allow for combining different input signals and for combining different load monitoring processes, to arrive at an improved load monitoring method.

In particular, the tower top acceleration signal may be considered as a structural load signal. Therefore, a Wöhler exponent as well as a design equivalent load may be assigned to the signal. Based on this, the fatigue damage of the signal may be calculated by the use of a load cycle accumulation and Miner's rule. Furthermore, using online load cycle accumulation, the instant rate of structural time usage may be calculated in real time.

According to this embodiment, a non-load signal (the acceleration signal) may be used for the purposes of deriving or calculating a damage rate, in particular structural damage rate (the instant time usage rate based on online cycle accumulation)) and the cumulated structural damage (structural fatigue time usage).

According to an embodiment of the present invention, the acceleration signal indicates acceleration of a top of a tower of the wind turbine, in particular acceleration of a nacelle mounted on top of the tower. The acceleration at the top of the wind turbine tower may be a good indication for the force or pressure or load the wind imposes on the rotor blades. Thereby, a conventionally installed accelerometer, which may be installed in the nacelle, may be used. Therefore, the method and also the arrangement for monitoring the mechanical load may be simplified and may be more cost-effective.

According to an embodiment of the present invention, the acceleration signal indicates acceleration in direction of the rotor shaft, in particular measured with a 2D-accelerometer.

During normal operation, the wind turbine shaft may be oriented (in particular by operating a yawing system) such as to be parallel to the wind direction. Therefore, a plane in which the rotor blades rotate may be perpendicular to the wind direction. The accelerometer installed within the wind turbine, in particular installed within the nacelle, may be oriented such that one axis of the accelerometer in which an acceleration is measurable, may be oriented parallel to the rotor shaft. According to an embodiment, only this component parallel to the rotor shaft may be used as an acceleration signal based on which the current load is derived. According to other embodiments, also another component of the acceleration, e.g. a component perpendicular to the rotor shaft (side-side-direction or horizontal direction) may also be (alternatively or additionally) used for deriving the current load. This other component of the acceleration, e.g. directed orthogonally to the rotation shaft, may however have less importance for deriving the current load, but may at least be used to slightly correct the derived current load compared to a current load which is exclusively derived based on the acceleration in the direction parallel to the rotor shaft.

According to an embodiment of the present invention, the component of the wind turbine for which load is monitored comprises at least one of a rotor blade mounted at a rotor shaft, the load relating to a bending moment or a deformation of the blade, in particular flap-wise bending moment; a rotor shaft, the load relating to a torsion of the shaft; a bearing of the shaft; a gear box; a hub connected to the shaft, wherein at least one blade is connected to the hub; the whole wind turbine.

The rotor blade (or the plural rotor blades connected to the rotor shaft) may be manufactured from a resin including e.g. glass fibers and/or one or more different types of polymer or plastic material. During operation, the rotor blade may bend due to the impact of the wind which may impose a strain on the rotor blade. The rotor blade may have installed or may not have installed a strain sensor, such as a strain gauge sensor. Wind forces acting on the blade may include lift forces and drag forces. The lift forces lead to flap-wise bending and the structural reaction to this is flap-wise bending moments. The drag forces lead to edge-wise bending and the structural reaction to this is edge-wise bending moments. Flap-wise and edge-wise bendings are also affected by gravity.

The rotor shaft may experience during operation a torsion (e.g. due to torques generated by wind impacting on rotor blades) which may tend to wear or damage the rotor shaft material. The rotor shaft torsion or in general the rotor shaft load may also be derived based on the acceleration signal, in particular by applying a model of the movement of the rotor shaft in dependence of the acceleration as measured.

Furthermore, the bearing of the shaft may also experience a load which may be derived based on the acceleration signal, in particular also comprising modeling the movement of the bearing or the wear and load of the bearing based on the acceleration signal. Also the gearbox and the hub may experience a load which may be derived based on the acceleration signal involving computations which may involve modeling the operation of these components based on the acceleration signal. In particular, other operational properties, such as in particular rotor speed may be taken into account in order to derive the current load of the different components of the wind turbine based on the acceleration signal.

In particular, each individual component of the wind turbine (or at least a number of components of the wind turbine) may be assigned a particular current load which may be individually derived (using a particular model or mathematical formula) based on the acceleration signal. Furthermore, the whole wind turbine may be assigned a wind turbine current load wherein current loads of plural components of the wind turbine may (e.g. in combination) be taken into account.

In particular, one or more load monitoring methodologies may be combined for the derivation of the current load based on the acceleration signal, to improve existing load monitoring methodologies.

According to an embodiment of the present invention, the current load relates to a damage rate of the component. Thereby, the current load may measure or be associated with a particular damage per time unit. Thereby, the current load may define or relate to a decline (temporarily) of a reliability or strength of the component.

According to an embodiment of the present invention, the method further comprises deriving an accumulated load of the component over an accumulation time interval based on the current load, wherein in particular Miner's rule is applied, wherein the accumulated load in particular relates to a cumulated damage of the component. In particular, a linear model for accumulating the load may be applied. Other embodiments may apply a non-linear model of accumulation of load. Miner's rule is well-known in the prior art, as can be taken from the publication Miner, A., "Cumulative Damage in Fatigue," Transactions of the ASME, Vol. 67, 1945.

Thereby, each component may be associated with a particular design accumulated load. When the design accumulated load has actually been experienced, the component may be considered to not operable any more, or the component may be considered as so far damaged or destroyed that it is not operable any more or cannot be operated any more. When the actually accumulated load reaches the design accumulated load, the component may be shutdown or may be required to be shutdown, in order to avoid damage to other components.

According to an embodiment of the present invention, for deriving the current load of the component based on the acceleration signal a simulation of the load as obtained by a load sensor is performed using as input the acceleration signal, to obtain a simulated load. In particular, a model describing the physical constitution and mechanical deformation or bending of the component may be set up and performed and a load sensor measurement signal may be simulated by such a physical/mathematical model. From the acceleration signal thereby, a simulated load may be derived. Therefrom, the current load may be derivable.

According to an embodiment of the present invention, the method further comprises adapting the acceleration signal, to at least approximately resemble the simulated load over a time interval imposing different loads, wherein the current load is derived from the adapted acceleration signal.

In particular, the acceleration signal and/or the simulated load sensor signal (obtained from the acceleration signal) may be adapted such as to resemble (ideally being equal to) the simulated load (or an actually measured load) over a time interval imposing different loads. Thereby, a kind of fitting may be performed or a function may be derived such that the simulated load (or an actually measured load) resembles or even at least approximately equals the adapted acceleration signal.

Thereby, a reliability of the derived current load to actually represent an actual load may be improved.

According to an embodiment of the present invention the adapting the acceleration signal is performed such that the adapted acceleration signal accumulated over the time interval equals the simulated load accumulated over the time interval. Thereby it may be insured that the adapted acceleration signal is indicative for the actually experienced load.

According to an embodiment of the present invention, depending on properties, in particular material and/or manufacturing process and/or dimension and/or shape, of the component a Wöhler exponent is selected which is used for adapting the acceleration signal.

Thereby, a reliability of the derived current load to resemble or to be equal to an actual load may be improved.

According to an embodiment of the present invention, deriving the current load is further based on other signals including at least one of a power production of the wind turbine; a rotor speed; a rotor acceleration; a wind speed; a strain gauge sensor measurement signal, the sensor being mounted at a rotor blade.

The other signal may, together with the acceleration signal, be used to derive the current load, in order to improve the reliability of the derived current load.

Even though a given signal may be very similar to another signal it may not be identical to the other signal and even though a given signal may be a good proxy for another signal it may not be a perfect proxy. Hence, a given signal may be combined with one or more signals in order to improve the proxy properties. The signals may be transformed to a better proxy signal e.g. by use of a transfer function.

According to an embodiment of the present invention, the method comprises performing a method for monitoring a mechanical load of at least one component of a wind turbine according to one of the preceding embodiments and controlling the wind turbine based on the monitored load.

Thereby, advantageously, the load monitoring method is used in order to control the wind turbine, in that the wind turbine is controlled based on the monitored current load. In particular, the wind turbine may be controlled based on the monitored current load and/or the monitored accumulated load.

Thereby, the wind turbine may in particular be controlled such that the lifetime of the wind turbine as a whole may be ensured in that it may be avoided that particular components reach their design accumulated load before other components reach their particular design accumulated loads, such that an even damage rate or accumulated damage of the components is achieved. Thereby, even wear of different components of the wind turbine may be achieved such as to reducing shutting down the wind turbine due to uneven wear or (at least partial) failure of different components.

According to an embodiment of the present invention, the controlling the wind turbine is such that the derived current load accumulated over an operation interval, in particular one year, deviates from a design accumulated load less than a threshold, in particular less than 10 %, further in particular less than 5 %.

Thereby, a reliable operation of the wind turbine may be achieved.

It should be noted that features which are individually or in any combination disclosed, described, mentioned or employed to a method for monitoring a mechanical load of at least one component of a wind turbine may also be, individually or in any combination, applied for, used for or included in an arrangement for monitoring a mechanical load of at least one component of a wind turbine according to an embodiment of the present invention and vice versa.

According to an embodiment, it is provided an arrangement for monitoring a mechanical load of at least one component of a wind turbine, the arrangement comprising an input terminal adapted to obtain an acceleration signal indicative of an acceleration of a portion of the wind turbine and a processor adapted to derive a current load of the component based on the acceleration signal.

Furthermore a wind turbine is provided that includes the arrangement for monitoring a mechanical load.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 illustrates a graph of structural time surpluses including an acceleration signal for deriving a current load considered in a method for monitoring a mechanical load according to an embodiment of the present invention;
Fig. 2 illustrates structural time surpluses including a simulated load and an acceleration signal of a one year simulation with an increased turbulence compared to the conditions simulated in Fig. 1.
Fig. 3 illustrates a graph showing structural time surpluses of a simulated load and an acceleration signal under the conditions of Fig. 2, wherein however a wind turbine control method is performed according to an embodiment of the present invention; and
Fig. 4 schematically illustrates a wind turbine according to an embodiment of the present invention including an arrangement for monitoring a mechanical load according to an embodiment of the present invention being adapted to perform a method for monitoring a mechanical load according to an embodiment of the present invention.

### Detailed Description

The illustration in the drawings is in schematic form.

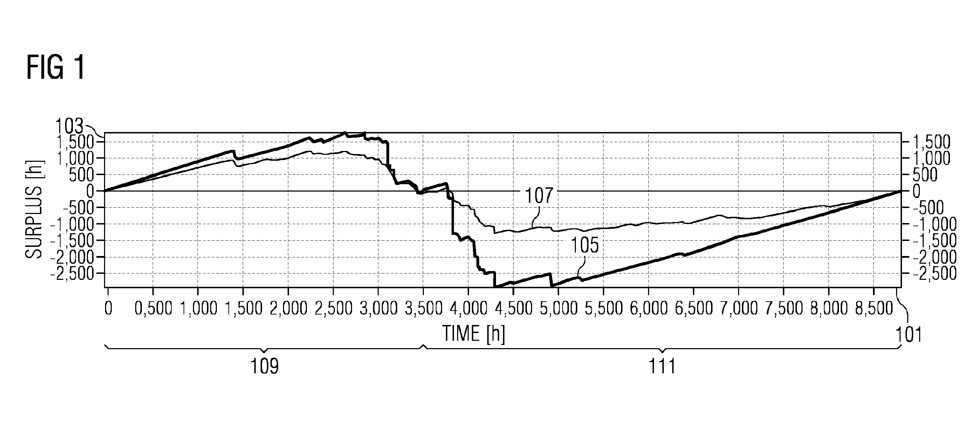

**Fig. 1** illustrates a graph wherein on an abscissa 101 the time in hours is indicated (spanning one year) while on an ordinate 103 a surplus of a load is indicated, wherein the surplus represents a difference between a designed accumulated damage and an actual accumulated damage. Thereby, the curve 105 shows a simulated blade root flap-wise bending moment such that the simulation 105 would resemble a flap-wise bending moment as measured for example by a strain gauge sensor installed in the rotor blade. Further, the curve 107 shows a measured acceleration measured at a nacelle via an accelerometer, thereby representing an acceleration signal which is used according to an embodiment of the present invention in a method for monitoring a mechanical load, wherein a current load is derived based on the acceleration signal 107.

As can be appreciated from Fig. 1 in a time interval 109, the surpluses of the curves 105 and 107 are above 0, indicating that during this interval 109, the design accumulated load has not been used up, which may for example happen if there prevails wind having relatively low wind speed. In another time interval 111, it can be taken from Fig. 1 that the surpluses of the curves 105, 107 are below 0 such that there is during this time interval 111 a higher load than expected on average during the year between 0 h and about 8700 h. At the beginning of the year and at the end of the year it can be seen that the surpluses for the curves 105, 107 are equal at 0. Hence, as no surplus of deficit has been produced, the structural time usage is 1:1 in average. That means, the rotor blade has been worn after 1 year as it was designed to. Further, it can be seen that the shapes of the curves 105, 107 are similar even though they are scaled differently. In particular, the curves 105, 107 illustrated in Fig. 1 illustrate a 1 year scenario representing design conditions for turbine operation without load control. In particular, for the top tower acceleration signal 107, a Wöhler exponent of 5 has been applied.

Thus, the acceleration signal 107 being measured by an accelerometer installed at the nacelle of the wind turbine may be used to derive a load signal of the rotor blade.

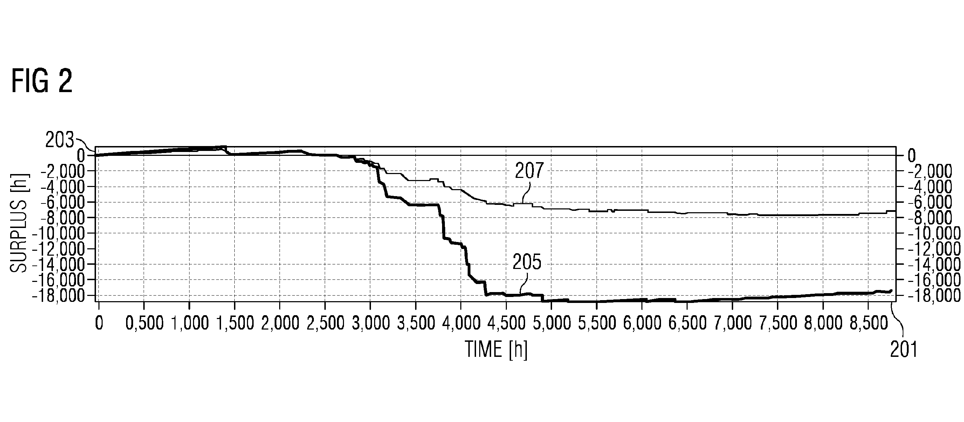

**Fig. 2** illustrates a graph, wherein the abscissa 201 indicates the time in hours and the ordinate 203 indicates the surplus of the load. Similarly as Fig. 1, the curve 205 indicates the blade root flap-wise bending moment as is simulated by a physical mathematical model and the curve 207 indicates the (measured) top tower acceleration signal. Different from the conditions illustrated in Fig. 1, the wind has a 2 % turbulence over design conditions. In general, the site conditions are 2 % turbulence over design conditions in order to represent a situation with a higher load compared to the situation considered in Fig. 1. Therefore, the loads for both curves 205, 207 increase and the time usage increases also. In fact, after 1 year of operation, there is a deficit (= negative surplus) of approximately 7000 hours for the tower top acceleration 207 and approximately 17000 hours for the blade root flap-wise moment 205.

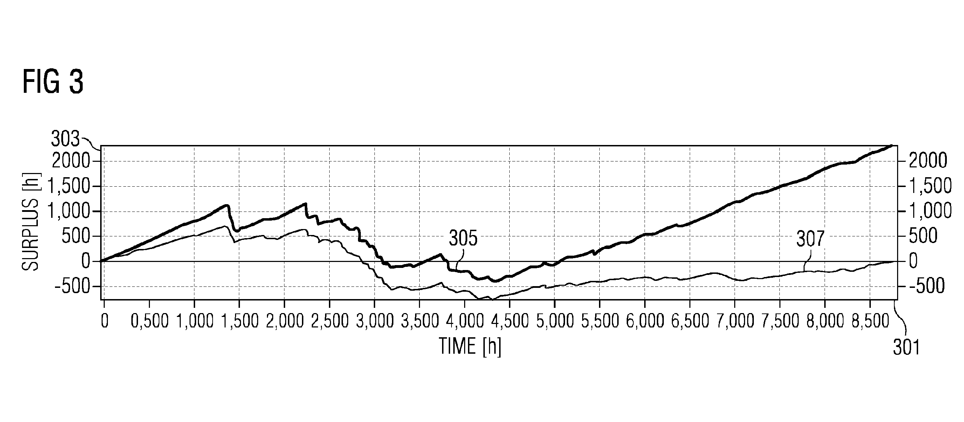

**Fig. 3** also illustrates a graph wherein the abscissa 301 indicates the time in hours and the ordinate 303 indicates the surplus of the loads. Again, the curve 300 indicates the blade root flap-wise moment as simulated and the curve 307 indicates the tower top acceleration signal as measured by an accelerometer installed in the nacelle of the wind turbine. The site conditions are the same as in Fig. 2, i.e. +2% turbulence over design conditions, however, also a load control according to an embodiment of the present invention has been applied to obtain the curves in Fig. 3. In particular, a load reducing operation mode has been activated according to the instant rate of time usage of the tower top acceleration signal 307 and hence the time usage of the acceleration signal is limited to 1:1 in average, as is reflected by the fact that the signal 307 reaches the surplus of 0 at the end of the year.

This wind turbine control has also protected the blade root from fatigue damage to an extent where the blade root flap-wise bending moment comes out of the year with a structural surplus of approximately 2400 hours. Hence, the tower top acceleration signal 307 has been used as a proxy for the blade root flap-wise bending moment and has in particular been used to derive a current load of the rotor blade.

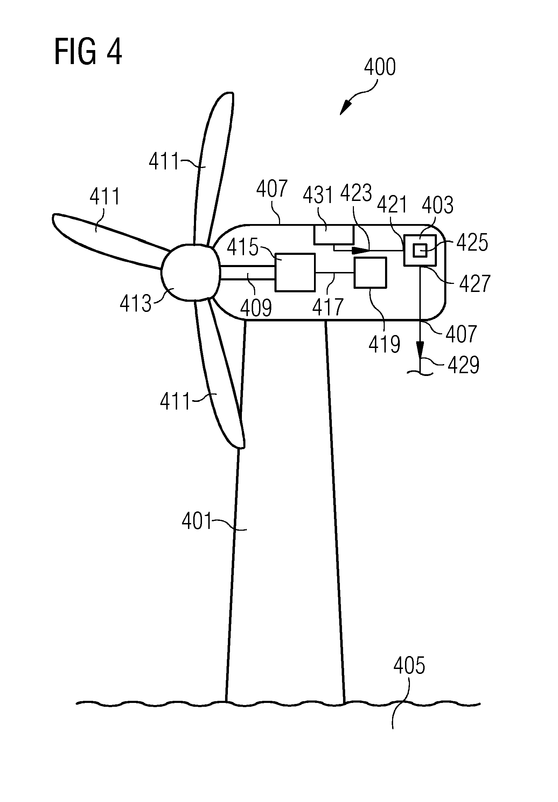

**Fig. 4** schematically illustrates a wind turbine 400 according to an embodiment of the present invention comprising an arrangement 403 for monitoring a current load of a component of the wind turbine according to an embodiment of the present invention. The wind turbine 400 comprises a wind turbine tower 401 which is installed at a ground 405. The wind turbine further comprises a nacelle 407 which is installed at the top of the tower 401 and which has rotatably supported a rotor shaft 409 which has attached plural rotor blades 411 via a hub 413 which is connected to the rotor shaft 409. The rotor shaft 409 is mechanically connected to a gearbox 415 which may allow to transform a rotational speed between the main rotor shaft 409 and a secondary shaft 417. In other embodiments, the gearbox 415 may be missing. The secondary shaft 417 is mechanically connected to a generator 419 which is driven by the secondary shaft 417 and which produces electric energy at not illustrated output terminals upon rotation of the primary or main rotation shaft 409 due to impact of wind on the plural rotor blades 411.

The wind turbine 400 comprises an arrangement 403 for monitoring a mechanical load of at least one component of the wind turbine 400 according to an embodiment of the present invention, wherein the arrangement 403 may be adapted to perform a method for monitoring a mechanical load of a component of the wind turbine according to an embodiment of the present invention.

The arrangement 403 has an input terminal 421 adapted to obtain an acceleration signal 423 indicative of an acceleration of a portion, in this case the nacelle 407, of the wind turbine 400. Further, the arrangement 403 comprises a processor 425 which is adapted to derive a current load 429 of the component, in particular the rotor blades 411, based on the acceleration signal 423. The arrangement 403 may also comprise an output terminal 427 for outputting the current load 429 of the rotor blade 411.

Further, the wind turbine 400 comprises an accelerometer 431 which measures an acceleration of the nacelle 407 parallel to the main rotation shaft 409 and provides the acceleration signal 423 to the arrangement 403 for load monitoring.

Based on the load signal 429, the wind turbine 400 may be adapted to control an operation of the wind turbine, such as a rotational speed, a rotor blade pitch angle, a power output, etc.

The arrangement 403 may comprise further input ports for obtaining other signals which may also be used to derive the current load 429 of the rotor blade 411. In particular, the input to the turbine load control system may be combined with other signals. Thereby, the signals may be load signals or non-load signals. The input to the turbine load control may be virtual signals estimated by a use of other signals. Any load control input (e.g. tower top acceleration and combinations with other signals) may be used for instant time consumption calculation. The instant time consumption may be used to change the turbine operation mode to any degree of save mode or any degree of operation mode changing the load situation. The Wöhler exponent used with tower top acceleration or any other signal may be set to any value which may be appropriate to the properties of the monitored component. The value of a design equivalent load or design accumulated load may be changed to any value in order to better represent a given structural component. Proxies may be used for load control as well as for load monitoring.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for monitoring a mechanical load of at least one component (411) of a wind turbine (400), the method comprising:
obtaining an acceleration signal (423) indicative of an acceleration of a portion (407) of the wind turbine; and
deriving a current load (429) of the component based on the acceleration signal (423).

2. Method according to claim 1, wherein the acceleration signal (423) indicates acceleration of a top (407) of a tower (411) of the wind turbine (400), in particular acceleration of a nacelle (407) mounted on top of the tower.

3. Method according to claim 2, wherein the acceleration signal (423) indicates acceleration in direction of the rotor shaft (409), in particular measured with a 2D-accelerometer (431).

4. Method according to one of claims 1 to 3, wherein the component of the wind turbine for which load is monitored comprises at least one of:
a rotor blade (411) mounted at a rotor shaft, the load relating to a bending moment or a deformation of the blade, in particular flap-wise bending moment;
a rotor shaft (409), the load relating to a torsion of the shaft;
a bearing of the shaft;
a gear box (415);
a hub (413) connected to the shaft, wherein at least one blade is connected to the hub;
the whole wind turbine (400).

5. Method according to one of the preceding claims, wherein the current load (429) relates to a damage rate of the component.

6. Method according to one of the preceding claims, further comprising:
deriving an accumulated load of the component over an accumulation time interval based on the current load, wherein in particular Miner's rule is applied,
wherein the accumulated load in particular relates to a cumulated damage of the component.

7. Method according to one of the preceding claims, wherein for deriving the current load (429) of the component based on the acceleration signal (423) a simulation of the load as obtained by a load sensor is performed using as input the acceleration signal, to obtain a simulated load.

8. Method according to claim 7, further comprising:
adapting the acceleration signal (423), to resemble the simulated load over a time interval imposing different loads, wherein the current load is derived from the adapted acceleration signal.

9. Method according to claim 8, wherein the adapting the acceleration signal is performed such that the adapted acceleration signal accumulated over the time interval equals the simulated load accumulated over the time interval.

10. Method according to one claims 8 or 9, wherein depending on properties, in particular material and/or manufacturing process and/or dimension and/or shape, of the component a Wöhler exponent is selected which is used for adapting the acceleration signal.

11. Method according to one of the preceding claims, wherein deriving the current load is further based on other signals including at least one of:
a power production of the wind turbine;
a rotor speed;
a rotor acceleration;
a wind speed;
a strain gauge sensor measurement signal, the sensor being mounted at a rotor blade;

12. Method for controlling a wind turbine, the method comprising:
performing a method for monitoring a mechanical load of at least one component of a wind turbine according to one of the preceding claims;
controlling the wind turbine based on the monitored load.

13. Method according to claim 12, wherein the controlling the wind turbine is such that the derived current load accumulated over an operation interval, in particular one year, deviates from a design accumulated load less than a threshold, in particular less than 10 %, further in particular less than 5 %.

14. Arrangement (403) for monitoring a mechanical load of at least one component (411) of a wind turbine (400), the arrangement comprising:
an input terminal (421) adapted to obtain an acceleration signal (423) indicative of an acceleration of a portion (407) of the wind turbine;
a processor (425) adapted to derive a current load (429) of the component based on the acceleration signal (423).

15. Wind turbine, comprising:
an arrangement (403) according to claim 14;
an accelerometer (431) mounted at a nacelle for generating the acceleration signal (423); and
a rotor blade (411) for which the current load (429) is derived by the processor based on the acceleration signal (423).
